Europäisches Patentamt

European Patent Office

Office européen des brevets

(19)

(11) EP 0 695 953 A1

## (12) EUROPÄISCHE PATENTANMELDUNG

(43) Veröffentlichungstag:
07.02.1996 Patentblatt 1996/06

(51) Int. Cl.$^6$: G01S 15/50

(21) Anmeldenummer: 95107840.1

(22) Anmeldetag: 22.05.1995

(84) Benannte Vertragsstaaten:
DE FR GB IT SE

(30) Priorität: 04.08.1994 DE 4427693

(71) Anmelder: Bayerische Motoren Werke
Aktiengesellschaft,
Patentabteilung AJ-3
D-80788 München (DE)

(72) Erfinder:
• Bastuck, Raymund, Dr.
D-85779 Haimhausen (DE)
• Riediger, Peter, Dr.
D-80339 München (DE)

### (54) Ultraschall-Entfernungsmessverfahren

(57)    Beschrieben wird ein Ultraschall-Entfernungs-messverfahren, bei dem die Laufzeit eines von einem Sender (1) ausgesandten, von einem Objekt (2) reflektierten und mit einem Empfänger wieder aufgenommenen Ultraschallsignals bestimmt wird, wobei der Sender und/oder der Empfänger während des Signallaufs relativ zum Objekt bewegt wird und der/die Winkel, unter dem sich das Objekt relativ zu Sender und/oder Empfänger befindet, aus der Dopplerverschiebung des aufgenommenen Ultraschallsignals bestimmt wird.

Fig. 1

EP 0 695 953 A1

## EP 0 695 953 A1

**Beschreibung**

Die Erfindung bezieht sich auf ein Ultraschall-Entfernungsmeßverfahren nach dem Oberbegriff des Patentanspruchs 1.

Derartige Verfahren werden beispielsweise bei Kraftfahrzeugen verwendet, um den Abstand zu einem stehenden Fahrzeug während eines Einparkvorgangs zu bestimmen. Neben der Verwendung als Rangierhilfe wird das Verfahren auch bei Herstellungsprozessen von Industriegütern benutzt. Dabei wird ein fahrbarer Träger zwischen verschiedenen Herstellungs- bzw. Montagestationen bewegt und in jeder Station mit Hilfe des Verfahrens positioniert.

In diesem Zusammenhang ist es bekannt, mehrere Einzelsensoren, bestehend aus einem oder mehreren Sendern mit entsprechend einem oder mehreren zugeordneten Empfängern, starr anzuordnen. Die Anzahl detektierbarer Objekte ist gleich der Anzahl an Sensoren. Die Ortsauflösung wird durch Anzahl, Positionierung und Ausrichtung der Einzelsensoren sowie deren Abstrahlcharakteristik bestimmt. Jeder Einzelsensor kann innerhalb seines Entfernungsmeßbereichs lediglich ein Objekt detektieren. Hohe Ortsauflösung bedingt daher eine entsprechend große Anzahl stark fokussierender Ultraschall-Sender, wobei die erforderliche Abstrahlcharakteristik des Senders nur durch eine entsprechend große Membranfläche bzw. zusätzliche Fokussiereinrichtungen (z. B. Horn) erreicht werden kann. Daraus ergeben sich relativ große Gesamtabmessungen sowie eine potentielle gegenseitige Beeinflussung der Einzelsensoren.

Der Erfindung liegt die Aufgabe zugrunde, ein Verfahren der eingangs genannten Art zu schaffen, mit dem mehrere in unterschiedlicher Entfernung bezüglich des Senders bzw. Empfängers auch unter unterschiedlichen Winkel angeordnete Objekte mit geringem Aufwand detektiert werden.

Die Erfindung löst diese Aufgabe durch die kennzeichnenden Merkmale des Patentanspruchs 1.

Durch die Bewegung des Senders und/oder Empfängers längs einer definierten Bahn ergibt sich die Möglichkeit, aufgrund des auftretenden Dopplereffekts in der gesamten, von Sender und Empfänger abgetasteten Halbebene eine winkelabhängige Frequenzverschiebung des abgestrahlten Schallfeldes zu erreichen, die zu einer Frequenzverschiebung des aufgenommenen Ultraschallsignals führt. Diese Frequenzverschiebung ist unabhängig von der Entfernung des Objekts und lediglich abhängig von dem Winkel, unter dem das Objekt bezüglich der Bahn des Senders bzw. Empfängers steht.

Das vom Objekt ausgehende reflektierte Schallbündel enthält somit über seine charakteristische Frequenzverschiebung eine Information über den Winkel, unter dem das Objekt bezüglich der Bahn des Senders bzw. Empfängers orientiert ist. Die Entfernung des Objekts ergibt sich aus der Schallaufzeit. Damit ist es möglich, mehrere Objekte innerhalb des abgestrahlten Schallfeldes zu detektieren.

Befinden sie sich bezüglich der Ausbreitungsrichtung des Schalls hintereinander, so können sie aufgrund der unterschiedlichen Schallaufzeit unterschieden werden, befinden sie sich hingegen im gleichen Abstand, so können sie aufgrund der unterschiedlichen Doppler-Frequenzverschiebung voneinander unterschieden werden.

Die Realisierung der Erfindung ist auf verschiedene Weise möglich. So können Sender und Empfänger gemeinsam und vorzugsweise mit konstanter Geschwindigkeit bewegt werden. Zum Erzeugen des Dopplereffektes genügt es dann, kurzzeitig ein Ultraschallsignal auszusenden. Die Sendezeit kann dabei kleiner als die minimale Laufzeit für ein Objekt mit Minimalabstand sein. Damit erhält man in relativ kurzer Zeit und lediglich durch die Signallaufzeit verzögert eine Information über ein oder mehrere zu detektierende Objekte. Die kurze Sendezeit macht es dann auch möglich, Sender und Empfänger durch einen einzigen Ultraschallwandler zu realisieren, der nacheinander im Sende- und Empfangsbetrieb arbeitet.

Es ist auch möglich, nur den Sender oder nur den Empfänger mit konstanter Geschwindigkeit zu bewegen. Es ist dann erforderlich, die Bewegung des Empfängers während der gesamten zu erwartenden Echolaufzeit durchzuführen.

Zwar ist es vorteilhaft, mit konstanter Geschwindigkeit zu arbeiten. Es ist aber auch möglich, die Geschwindigkeit zu variieren. Im Rahmen der Auswertung muß dann die jeweilige Geschwindigkeit, die bei der Schallaussendung bzw. dem - empfang vorliegt, zusätzlich berücksichtigt werden.

Die Bewegung kann dann auch oszillierend, d. h. mit Wechsel der Bewegungsrichtung erfolgen. Es ist dann auch möglich, Eigenbewegungen des Objekts zu erkennen. Dies setzt eine mehrfache Schallaussendung und Reflexion zum und vom Objekt voraus.

Schließlich kann anstelle der konkreten Bewegung des Senders und/oder Empfängers auch eine Simulation dieser Bewegung vorgenommen werden. Voraussetzung hierfür ist die Anordnung mehrerer Sender und/oder Empfänger nebeneinander, die im zeitlich definierten Abstand ein Ultraschallsignal aussenden, empfangen.

Anhand der Zeichnung ist die Erfindung weiter erläutert. Dabei zeigt:

Fig.1    eine Anordnung zur Realisierung einer ersten Ausführungsform des erfindungsgemäßen Verfahrens und

Fig.2    eine Ausführungsvariante für ein alternatives erfindungsgemäßes Verfahren, sowie

Fig.3    eine Grafik zur Erläuterung der Variante von Fig. 2.

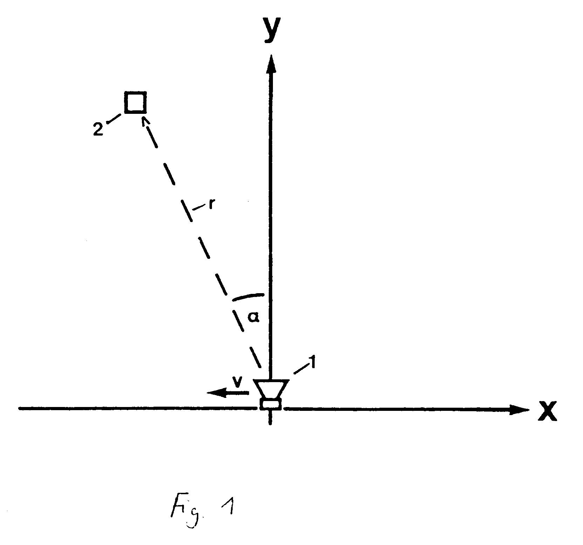

Bei der in Fig. 1 gezeigten Ausführungsform wird ein Ultraschallwandler 1 auf einer linearen Bahn mit konstanter Geschwindigkeit v bewegt. Er sendet ein Ultraschallsignal mit einer Frequenz $f_0$ aus, das von einem Objekt 2 reflektiert

2

EP 0 695 953 A1

und mit dem sich weiterhin mit der Geschwindigkeit v bewegenden Ultraschallwandler 1 aufgenommen wird. Der Ultraschallwandler wird dabei nach Aussenden eines Ultraschallsignals, d. h. nach dem Sendebetrieb, in den Aufnahmebetrieb umgeschaltet. Er arbeitet dann als Empfänger.

Innerhalb der gesamten Halbebene mit einem Polarwinkel $\alpha$ von ± 90° in die das Ultraschallsignal durch den Ultraschallwandler 1 abgestrahlt wird, ergibt sich eine vom Polarwinkel $\alpha$ abhängige Frequenz f ($\alpha$) des abgestrahlten Schallfeldes von

$$f(\alpha) \; = \; \frac{f_0 \cdot c}{c + v \cdot \sin\alpha} \qquad\qquad \text{c: Schallgeschwindigkeit.}$$

Ein vom Objekt 2 ausgehendes reflektiertes Schallbündel enthält somit über seine charakteristische Frequenzverschiebung eine Information über den Polarwinkel $\alpha$, während der Betrag des Radiusvektors r über die Schallaufzeit gemessen werden kann. Werden zu verschiedenen Zeiten Ultraschallsignale vom Wandler 1 ausgesandt und dort auch wieder empfangen, so liefert das Objekt 2 entsprechend den dann ermittelten Werten für r und $\alpha$ eine entsprechend unterschiedliche Information. Bei einer entsprechend schnellen Aufeinanderfolge derartiger Schallsignale kann der Ort und auch eine ggf. vorliegende Bewegung des Objekts 2 bestimmt werden.

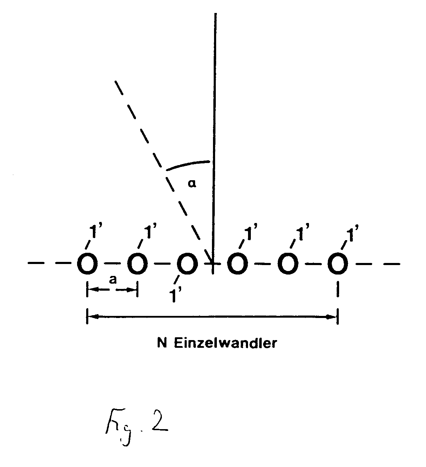

Bei der in Fig. 2 dargestellten Ausführungsform ist anstelle eines linear bewegten Wandlers eine Anzahl n linear angeordneter Wandler 1' angeordnet, die in ihrem Aufbau dem Wandler 1 von Fig. 1 entsprechen. Jeder Wandler 1' sendet ein Ultraschallsignal konstanter Dauer aus, wobei die Abstrahlung an einem Ende der Wandlerkette beginnt und alle nachfolgenden Wandler 1' mit einem jeweils konstanten Zeitversatz $\delta t$ sequentiell angesteuert werden.

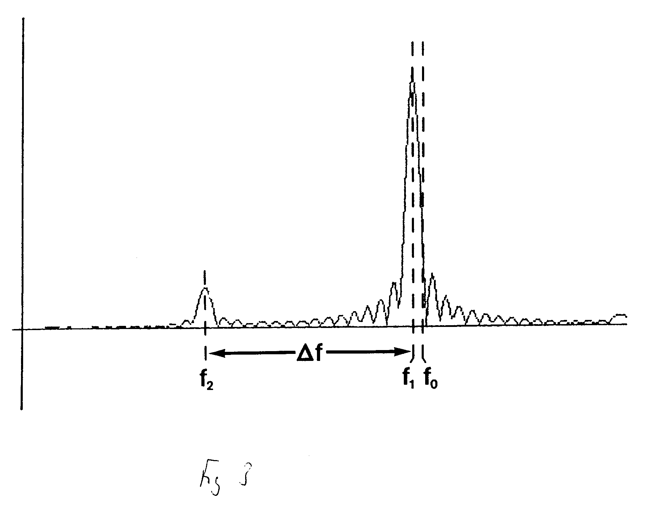

Im Schallfeld, in dem sich ggf. ein oder mehrere Objekte befinden, ergibt sich eine sich ggf. überlappende Folge von Ultraschallsignalen, die insgesamt einen amplituden- und phasenmodulierten Wellenzug mit winkelabhängigen Parametern erzeugt. Das charakteristische Spektrum dieses Signals besteht, wie in der in Fig. 3 abgebildeten Grafik gezeigt, aus einer von der Wandler-Anstiegszeit abhängig ausgedehnten Liniengruppe, die sich um die Ansteuerfrequenz $f_o$ herum anordnen, wobei die Einhüllende des Amplitudenganges sich aus der Interferenz zeitlich überlappender Einzel-Schallsignale herleitet. Das von einem Objekt reflektierte Schallsignal besitzt eine Frequenzverschiebung

$$f(\alpha) \approx f_2 + \frac{(f_1 - f_2) \cdot \alpha}{180^0} \qquad\qquad (-90^0 \leqq \alpha \leqq 90^0) \; .$$

*mit der winkelabhängigen spektralen Periodizität*

$$\Delta f(\alpha) \; = \; f_1 - f_2 \approx \frac{1}{\Delta t_B - (\frac{a}{c} \cdot \sin\alpha)} \quad , \qquad \begin{array}{l} \text{c: Schallgeschwindigkeit} \\ \Delta t_B\text{: Dauer eines Einzelsignals} \\ \text{a: Senderabstand} \end{array}$$

Damit ergibt sich auch hier eine vom Polarwinkel $\alpha$ abhängige Quasi-Codierung des mit dem jeweiligen Wandler 1' aufgenommenen reflektierten Ultraschallsignal.

Im Gegensatz zur Ausführungsform von Fig. 1 ist es hier möglich, ohne mechanisch bewegte Teile eine hohe (virtuelle) Dopplergeschwindigkeit bei hoher Geschwindigkeitskonstanz zu erzielen. Da die Wandler 1' nicht bewegt sind, ist es auch möglich, die gesamte Anordnung zu kapseln und damit gegen Umwelteinflüsse zu schützen.

3

# EP 0 695 953 A1

**Patentansprüche**

1. Ultraschall-Entfernungsmeßverfahren, bei dem die Laufzeit eines von einem Sender ausgesandten, von einem Objekt reflektierten und mit einem Empfänger wieder aufgenommenen Ultraschallsignals bestimmt wird, dadurch gekennzeichnet, daß der Sender und/oder der Empfänger während des Signallaufs relativ zum Objekt bewegt wird und daß der/die Winkel, unter dem sich das Objekt relativ zu Sender und/oder Empfänger befindet, aus der Dopplerverschiebung des aufgenommenen Ultraschallsignals bestimmt wird.

2. Verfahren nach Anspruch 1, dadurch gekennzeichnet, daß der Sender und/oder der Empfänger mit gleichmäßiger Geschwindigkeit bewegt wird/werden.

3. Verfahren nach Anspruch 1 oder 2, dadurch gekennzeichnet, daß die Bewegung des Senders und/oder Empfängers durch eine aufeinanderfolgende Aussendung von Ultraschallsignalen durch mehrere nebeneinanderliegende Ultraschallquellen simuliert wird.

4

Fig. 1

N Einzelwandler

Fig. 2

Fig 3

Europäisches Patentamt

**EUROPÄISCHER RECHERCHENBERICHT**

Nummer der Anmeldung

EP 95 10 7840

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-B-24 29 072 (INTERNATIONAL STANDARD ELECTRIC CORP.) <br> * Spalte 2, Zeile 35 - Spalte 3, Zeile 7; Abbildung 8 * <br> * Spalte 7, Zeile 63 - Spalte 8, Zeile 44 * <br><br> --- | 1 | G01S15/50 |
| Y | EP-A-0 453 905 (ANSCHÜTZ & CO) <br> * Zusammenfassung; Abbildung 1 * <br> --- | 1 | |
| A | US-A-3 891 960 (M. W. WIDENER) <br> * Spalte 1, Zeile 40 - Spalte 2, Zeile 14; Abbildung 1 * <br> --- | | |
| A | US-A-3 827 022 (N. O. BOOTH) <br> * Zusammenfassung; Abbildung 4 * <br> --- | | |
| A | DE-C-12 89 147 (TELEFUNKEN) <br> * Spalte 1, Zeile 29 - Zeile 55 * <br> --- | | |
| A | DE-B-15 66 847 (FRIED. KRUPP) <br> * das ganze Dokument * <br> ----- | | **RECHERCHIERTE SACHGEBIETE (Int.Cl.6)** <br><br> G01S <br> G08G <br> G05D |

Der vorliegende Recherchenbericht wurde für alle Patentansprüche erstellt

| Recherchenort | Abschlußdatum der Recherche | Prüfer |
|---|---|---|
| BERLIN | 18. Oktober 1995 | Breusing, J |